# EUROPEAN PATENT SPECIFICATION

(11) **EP 1 923 430 B1**
(45) Date of publication and mention of the grant of the patent: **12.10.2011**
(21) Application number: 07021477.0
(22) Date of filing: 05.11.2007
(51) Int. Cl.: C08L 83/04

(54) **Extrusion moldable silicone rubber composition and making method**
Strangpressbare Silikonkautschukzusammensetzung und Herstellungsverfahren dafür
Extrusion de composition de caoutchouc en silicone moulé et procédé de fabrication

(30) Priority: 17.11.2006 JP 2006311223
(43) Date of publication of application: 21.05.2008
(73) Proprietor: Shin-Etsu Chemical Co., Ltd., Tokyo (JP)
(72) Inventor: Hayashida, Osamu, Annaka-shi, Gunma-ken (JP); Ikeno, Masayuki, Annaka-shi, Gunma-ken (JP)
(74) Representative: Merkle, Gebhard

(56) References cited:
- EP-A- 1 227 133
- US-A- 4 077 943
- US-A- 5 179 148

## Description

### TECHNICAL FIELD

This invention relates to a silicone rubber composition which is improved in shape retention when extrusion molded and a method for preparing the same, and more particularly, to a silicone rubber composition which is extrusion molded through a die such that the extrudate emerging from the die has a cross-sectional shape which remains substantially unchanged from the die shape.

### BACKGROUND ART

In general, silicone rubber compositions can be continuously molded on an extruder into parts of different shape and size. The unvulcanized molded parts are placed in a hot vulcanizing furnace or steam kettle where they are vulcanized and cured using organic peroxides or platinum catalysts, obtaining silicone rubber parts. However, the silicone rubber compositions are known to have the problems that the extrudate tends to expand immediately after emergence from the die so that the extrudate increases its cross-sectional area, and when held for some time after extrusion, the extrudate sags and deforms because it lacks rubber stiffness or body. The expansion is quantified by a die swell. Then minimizing the die swell or increasing the plasticity of rubber compound to prevent sagging is requisite to improve the dimensional precision and percent yield of finished molded parts.

Reference should be made to JP-A 04-020569, JP-A 04-117457, and JP-A 05-065415. US 4,077,943 discloses organopolysiloxane compositions comprising a diorganopolysiloxane, an organohydrogenpolysiloxane and at least one epoxy or ester group bonded to the silicone atom through an Si-C linkage in a molecule and a platinum catalyst.

### DISCLOSURE OF THE INVENTION

An object of the invention is to provide an extrusion moldable silicone rubber composition which exhibits a reduced value of die swell upon extrusion molding and offers an increased plasticity to prevent sagging in the rubber compound state; and a method for preparing the same.

The inventor has found that a silicone rubber composition exhibiting a reduced die swell and an increased plasticity upon extrusion molding is obtained by providing a silicone rubber formulation comprising an organopolysiloxane and reinforcing silica, adding an epoxy-modified siloxane thereto, and heat treating the resulting formulation.

Accordingly, the present invention provides an extrusion moldable silicone rubber composition comprising
a formulation obtained by heat treating a mixture comprising (a) 100 parts by weight of an organopolysiloxane having the average compositional formula (1):

RₐSiO_{(4-a)/2} (1)

wherein R is each independently a substituted or unsubstituted monovalent hydrocarbon group, and "a" is a positive number of 1.90 to 2.05, (b) 10 to 100 parts by weight of reinforcing silica having a specific surface area of at least 50 m²/g, and (c) 0.1 to 50 parts by weight of a silicone compound having 3 to 1,000 epoxy groups per molecule, at a temperature of at least 150°C for at least 30 minutes, and
(d) a catalytic amount of a hot air vulcanizing catalyst.

The invention also provides a method for preparing an extrusion moldable silicone rubber composition, comprising the steps of heat treating a mixture comprising components (a) to (c) at a temperature of at least 150°C for at least 30 minutes to form a silicone rubber formulation, and incorporating component (d) in the formulation.

### BENEFITS OF THE INVENTION

According to the invention, a silicone rubber composition exhibiting a reduced expansion or sagging upon extrusion molding is obtained by adding an epoxy-containing silicone compound to a silicone rubber formulation, followed by heat treatment. The silicone rubber composition is improved in shape retention during extrusion molding, and thus suited for extrusion molding of silicone rubber parts such as tubes, hoses and electric cables.

### DESCRIPTION OF THE PREFERRED EMBODIMENT

Briefly stated, the extrusion moldable silicone rubber composition of the present invention comprises components (a) to (d):
(a) an organopolysiloxane having the average compositional formula (1):

   RₐSiO_{(4-a)/2} (1)

   wherein R is each independently a substituted or unsubstituted monovalent hydrocarbon group, and "a" is a positive number of 1.90 to 2.05,
(b) reinforcing silica having a specific surface area of at least 50 m²/g,
(c) a silicone compound having 3 to 1,000 epoxy groups per molecule, and
(d) a hot air vulcanizing catalyst.

### (a) Organopolysiloxane

The organopolysiloxane used as a base component (a) in the inventive composition has the average compositional formula (1).

RₐSiO_{(4-a)/2} (1)

Herein R is each independently selected from substituted or unsubstituted monovalent hydrocarbon groups, preferably having 1 to 10 carbon atoms, and more preferably 1 to 8 carbon atoms, for example, alkyl groups such as methyl, ethyl, propyl and butyl, cycloalkyl groups such as cyclohexyl, alkenyl groups such as vinyl, allyl, butenyl and hexenyl, aryl groups such as phenyl and tolyl, and substituted forms of the foregoing in which some or all hydrogen atoms attached to carbon atoms are substituted by halogen atoms, cyano groups or the like, such as chloromethyl, trifluoropropyl and cyanoethyl. R should preferably contain at least two aliphatic unsaturated groups, typically alkenyl groups, with a content of aliphatic unsaturated groups in R being preferably 0.001 to 20 mol%, and more preferably 0.025 to 5 mol%. The subscript "a" is a positive number of 1.90 to 2.05.

The organopolysiloxane of formula (1) is generally linear although a mixture of two or more different molecular structures is acceptable. The organopolysiloxane preferably has an average degree of polymerization of 100 to 10,000, and more preferably 3,000 to 8,000.

### (b) Reinforcing silica

The silica filler is used herein in order to enhance the hardness and mechanical strength (e.g., tensile strength) of silicone rubber. It is reinforcing silica having a specific surface area of at least 50 m²/g, and preferably 100 to 400 m²/g, as measured by the BET method. If silica has a specific surface area of less than 50 m²/g, the vulcanized rubber may lack physical strength.

Exemplary silicas include fumed silica, fired silica and precipitated silica, which may be used alone or in admixture. These silicas may be surface treated with linear organopolysiloxanes, cyclic organopolysiloxanes, hexamethyldisilazane, dichlorodimethylsilane or the like, prior to use.

The silica is incorporated in an amount of 10 to 100 parts, and preferably 10 to 50 parts by weight per 100 parts by weight of organopolysiloxane (a). Outside the range, the silicone rubber composition may become difficult to work or fail to acquire mechanical strength.

### (c) Epoxy-containing silicone

Component (c) is an epoxy-containing silicone compound by which the inventive composition is characterized. The silicone compound should have 3 to 1,000 epoxy groups per molecule, specifically 3 to 1,000 epoxy groups, and more specifically 3 to 100 epoxy groups.

The epoxy-containing silicone compounds include those comprising as epoxy-containing units, R¹SiO_{3/2}, R¹₂SiO_{2/2}, R¹R²SiO_{2/2}, R¹₃SiO_{1/2}, R¹₂R²SiO_{1/2}, and R¹R²₂SiO_{1/2} units. Those comprising R¹SiO_{3/2}, R¹R²SiO_{2/2}, and R¹R²₂SiO_{1/2} units are preferred, and those comprising R¹R²SiO_{2/2} and R¹R²₂SiO_{1/2} units are more preferred.

Herein, R¹ is each independently selected from substituted or unsubstituted, monovalent hydrocarbon groups of 1 to 10 carbon atoms having 3 to 1,000 epoxy group, examples of which are shown below. 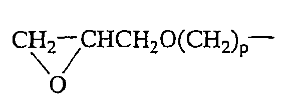 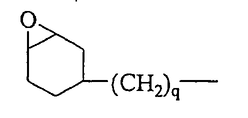 Note that p is an integer of 1 to 6, and q is an integer of 1 to 4.

R² is each independently selected from substituted or unsubstituted, monovalent hydrocarbon groups of 1 to 8 carbon atoms, preferably 1 to 6 carbon atoms, for example, alkyl groups such as methyl, ethyl, propyl and butyl, cycloalkyl groups such as cyclohexyl, alkenyl groups such as vinyl, allyl, butenyl and hexenyl, aryl groups such as phenyl and tolyl, and substituted forms of the foregoing in which some or all hydrogen atoms attached to carbon atoms are substituted by halogen atoms, cyano groups or the like, such as chloromethyl, trifluoropropyl and cyanoethyl.

In addition to the epoxy-containing units, the epoxy-containing silicone compounds may contain epoxy-free units such as SiO_{4/2}, R²SiO_{3/2}, R²₂SiO_{2/2}, and R²₃SiO_{1/2} units, with those containing R²₂SiO_{2/2} and R²₃SiO_{1/2} units being preferred.

Preferably R¹ accounts for 1 to 80 mol%, and more preferably 5 to 50 mol% of the entire silicon-bonded organic groups (R¹+R²).

Illustrative examples of the epoxy-containing silicone compounds are given below. 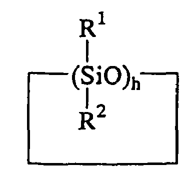 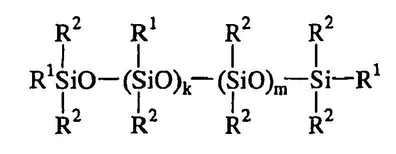 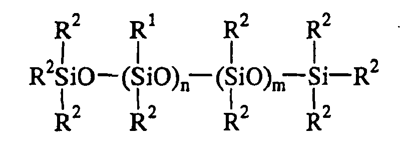 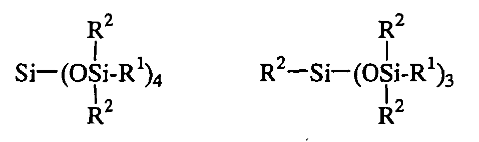 In the formulae, h is an integer of 3 to 1,000, more specifically 3 to 100, n is an integer of 3 to 1,000, more specifically 3 to 500, k is an integer of 1 to 1,000, and m is an integer of 1 to 50.

It is believed that the epoxy-containing silicone compound functions such that when the silicone rubber composition is compounded and heat treated, epoxy groups undergo ring-opening and ring-opened molecules polymerize together to form a steric structure. As a result, partial crosslinks are introduced in the unvulcanized silicone rubber. The unvulcanized compound is thus endowed with an increased plasticity and improved die swell. The epoxy-containing silicone compound is added at the same time when silica filler is added to the silicone polymer during the silicone rubber compounding operation.

An appropriate amount of component (c) added is 0.1 to 50 parts, and preferably 0.5 to 10 parts by weight per 100 parts by weight of organopolysiloxane (a). Less than 0.1 pbw of component (c) fails to attain the object whereas more than 50 pbw substantially interferes with silicone rubber handling.

### (d) Catalyst

Component (d) is a catalyst capable of hot air vulcanization of silicone rubber. It may be any of well-known catalysts which are used in hot air vulcanization of silicone rubber compositions under atmospheric pressure. Known catalysts include addition reaction curing agents (combinations of organohydrogenpolysiloxane and platinum base catalyst) and organic peroxides.

When the catalyst used is an organic peroxide, the organopolysiloxane (a) should preferably have an alkenyl content of 0.001 to 5 mol%. Exemplary organic peroxides include benzoyl peroxide, o-methylbenzoyl peroxide, p-methylbenzoyl peroxide, dicumyl peroxide, and 2,4-dichlorobenzoyl peroxide, which may be used alone or in admixture. An appropriate amount of the organic peroxide used is 0.1 to 5 parts, and more preferably 0.3 to 3 parts by weight per 100 parts by weight of organopolysiloxane (a).

When the composition cures through addition reaction, combinations of organohydrogenpolysiloxanes and platinum base catalysts are used. In the case of addition reaction cure, the organopolysiloxane (a) should preferably have an alkenyl content in the range previously described for (a).

Exemplary platinum base catalysts include elemental platinum, platinum compounds, platinum complexes, chloroplatinic acid, and complexes of chloroplatinic acid with alcohols, aldehydes, ethers, and olefins. The platinum base catalyst is desirably added in an amount of 1 to 2,000 ppm of platinum atoms based on the weight of organopolysiloxane (a).

The organohydrogenpolysiloxanes may be linear, branched or cyclic and preferably have a degree of polymerization of up to 300. Examples include dimethylhydrogensilyl-end-capped diorganopolysiloxanes, copolymers of dimethylsiloxane units, methylhydrogensiloxane units, and terminal trimethylsiloxy units, low-viscosity fluids of dimethylhydrogensiloxane (H(CH₃)₂SiO_{0.5}) units and SiO₂ units, 1,3,5,7-tetrahydrogen-1,3,5,7-tetramethylcyclotetrasiloxane, 1-propyl-3,5,7-trihydrogen-1,3,5,7-tetramethylcyclotetrasiloxane, and 1,5-dihydrogen-3,7-dihexyl-1,3,5,7-tetramethylcyclotetrasiloxane. The organohydrogenpolysiloxane is added as the curing agent in such an amount as to provide 50 to 500 mol%, especially 80 to 300 mol% of silicon-bonded hydrogen atoms relative to the aliphatic unsaturated groups (alkenyl groups) on organopolysiloxane (a).

To the silicone rubber composition of the invention, various additives such as colorants and heat resistance modifiers and other ingredients such as reaction regulators, mold release agents, and filler dispersants may be added, if desired.

The silicone rubber composition may be prepared by intimately mixing components (a) to (c) on a rubber kneading machine such as a twin-roll mill, Banbury mixer, dough mixer or kneader, followed by heat treatment. During the preparation of the silicone rubber formulation, heat treatment is carried out at a temperature of at least 150°C, desirably 150 to 200°C for a time of at least 30 minutes, desirably 60 to 120 minutes. Temperatures below 150°C are too low to induce the ring-opening of epoxy groups on component (c) which is essential in the invention. Heat treatment times of less than 30 minutes are also short for this purpose.

The resulting formulation (or compound) has an increased plasticity as a result of heat treatment. Note that the plasticity refers to Williams plasticity.

Component (d) is then incorporated into the formulation, yielding a desired silicone rubber composition. This silicone rubber composition can be extrusion molded into parts of the desired shape in a particular application, for example, electric cables, extruded tubes, and hoses. Since the silicone rubber composition experiences no expansion and little sagging upon extrusion molding, molded parts are improved in dimensional precision and production yield.

In curing the silicone rubber composition, parameters may be selected appropriate depending on a curing technique, thickness of molded parts and the like. The composition is generally cured at a temperature of 80 to 600°C for a time of 10 seconds to 30 days.

### EXAMPLE

Examples of the invention are given below by way of illustration and not by way of limitation. All parts are by weight.

### Example 1 and Comparative Example 1

The organopolysiloxane (a) used was a methylvinylpolysiloxane gum consisting of 99.85 mol% of (CH₃)₂SiO units and 0.15 mol% of (CH₃)(CH₂=CH)SiO units, capped with (CH₂=CH)(CH₃)₂SiO_{0.5} units at molecular chain ends, and having a degree of polymerization of about 7,000. In a kneader, 100 parts of the methylvinylpolysiloxane gum, 45 parts of fumed silica having a BET specific surface area of 200 m²/g, 10 parts of a dimethylpolysiloxane containing hydroxyl groups at molecular chain ends and having a degree of polymerization of 10 as a dispersant, and 3.0 parts of an epoxy-modified silicone compound, designated Compound A below, were intimately mixed and then heat treated at 180°C for 2 hours. To this formulation, 0.7 part of p-methylbenzoyl peroxide was added as a curing agent. This was milled on a twin-roll mill, yielding a silicone rubber composition (Example 1).

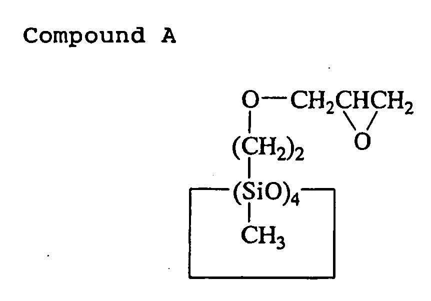

A silicone rubber composition (Comparative Example 1) was prepared as in Example 1 except that Compound A was omitted.

Using a 60-mm diameter extruder with a circular die having a diameter of 2.5 mm, each composition was extruded into a cylinder. It was hot air vulcanized in a dryer at 250°C for 10 minutes. A die swell (S1-S0)/S0 was determined, provided that the cylinder has a cross-sectional area S1 and the die has a cross-sectional area S0. Each composition was also measured for Williams plasticity according to JIS K6249. The results are shown in Table 1.

**Table 1**

| | Example 1 | Comparative Example 1 |
|---|---|---|
| Silicone gum | 100 pbw | 100 pbw |
| Fumed silica | 45 pbw | 45 pbw |
| Dimethylpolysiloxane | 10 pbw | 10 pbw |
| Compound A | 3 pbw | 0 |
| Heat treatment temperature/time | 180°C/2 hr | 180° C/2 hr |
| Williams plasticity | 390 | 280 |
| Die swell | 10% | 42% |

### Example 2 and Comparative Examples 2 and 3

Silicone rubber compositions were prepared as in Example 1 except that another epoxy-modified silicone compound, designated Compound B below, was used instead of Compound A. Example 2 used 3 parts of Compound B. Comparative Example 2 used 0.05 part of Compound B. Comparative Example 3 corresponded to Example 2 where the heat treatment was carried out at 50°C for 30 minutes.

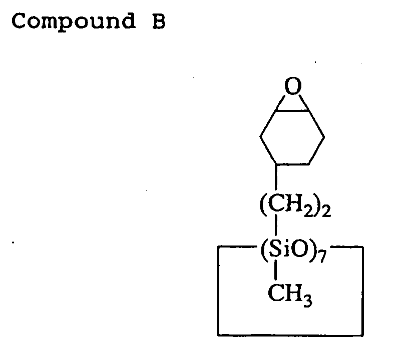

As in Example 1, each composition was measured for a die well after extrusion molding and for Williams plasticity. The results are shown in Table 2.

**Table 2**

| | Example | Comparative Example | |
|---|---|---|---|
| | 2 | 2 | 3 |
| Silicone gum | 100 pbw | 100 pbw | 100 pbw |
| Fumed silica | 45 pbw | 45 pbw | 45 pbw |
| Dimethylpolysiloxane | 10 pbw | 10 pbw | 10 pbw |
| Compound B | 3 pbw | 0.05 pbw | 3 pbw |
| Heat treatment temperature/time | 180° C/2 hr | 180° C/2 hr | 50° C/30 min |
| Williams plasticity | 420 | 300 | 280 |
| Die swell | 9% | 35% | 45% |

### Example 3 and Comparative Example 4

A silicone rubber composition (Example 3) was prepared as in Example 1 except that 4 parts of another epoxy-modified silicone compound, designated Compound C below, was used instead of Compound A. A silicone rubber composition (Comparative Example 4) was prepared as in Example 1 except that 4 parts of an epoxy-free silicone compound, designated Compound D below, was used instead of Compound A.

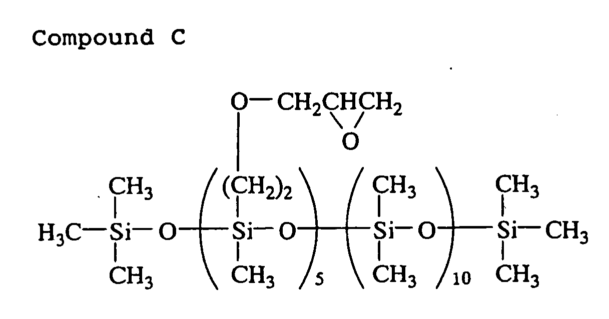

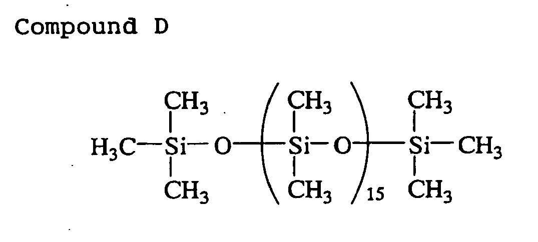

As in Example 1, each composition was measured for a die well after extrusion molding and for Williams plasticity. The results are shown in Table 3.

**Table 3**

| | Example 3 | Comparative Example 4 |
|---|---|---|
| Silicone gum | 100 pbw | 100 pbw |
| Fumed silica | 45 pbw | 45 pbw |
| Dimethylpolysiloxane | 10 pbw | 10 pbw |
| Compound C | 4 pbw | - |
| Compound D | - | 4 pbw |
| Heat treatment temperature/time | 180° C/2 hr | 180°C/2 hr |
| Williams plasticity | 380 | 260 |
| Die swell | 12% | 48% |

## Claims

1. An extrusion moldable silicone rubber composition comprising a formulation obtained by heat treating a mixture comprising (a) 100 parts by weight of an organopolysiloxane having the average compositional formula (1):
RₐSiO_{(4-a)/2} (1)
wherein R is each independently a substituted or unsubstituted monovalent hydrocarbon group, and "a" is a positive number of 1.90 to 2.05, (b) 10 to 100 parts by weight of reinforcing silica having a specific surface area of at least 50 m²/g, and (c) 0.1 to 50 parts by weight of a silicone compound having 3 to 1,000 epoxy groups per molecule, at a temperature of at least 150 °C for at least 30 minutes, and
(d) a catalytic amount of a hot air vulcanizing catalyst.

2. A method for preparing an extrusion moldable silicone rubber composition, comprising the steps of: heat treating a mixture comprising (a) 100 parts by weight of an organopolysiloxane having the average compositional formula (1):
RₐSiO_{(4-a)/2} (1)
wherein R is each independently a substituted or unsubstituted monovalent hydrocarbon group, and "a" is a positive number of 1.90 to 2.05, (b) 10 to 100 parts by weight of reinforcing silica having a specific surface area of at least 50 m²/g, and (c) 0.1 to 50 parts by weight of a silicone compound having 3 to 1,000 epoxy groups per molecule, at a temperature of at least 150 ° C for at least 30 minutes to form a formulation, and incorporating (d) a catalytic amount of a hot air vulcanizing catalyst in the formulation.

3. The composition of claim 1, wherein the silicone compound of component (c) has 3 to 500 epoxy groups per molecule.

4. The composition of claim 1, wherein the silicone compound of component (c) has 3 to 100 epoxy groups per molecule.

5. The composition of any one of claims 1, 3 or 4, wherein the epoxy group in component (c) is 3,4-epoxycyclohexylethyl group or γ-glycidoxypropyl group which is bonded to a silicone atom of the silicone compound.

6. The composition of any one of claims 1, 3 or 4, wherein the epoxy group in component (c) is at least one epoxy-containing compound having the formula selected from the group consisting of the following formulae: 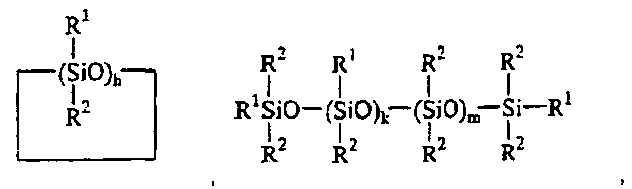 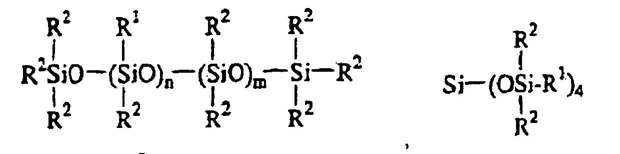 and 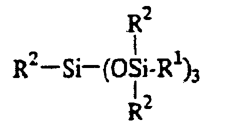 wherein R¹ is each independently selected from substituted or unsubstituted, monovalent hydrocarbon groups of 1 to 10 carbon atoms having at least one epoxy group, R² is each independently selected from substituted or unsubstituted, monovalent hydrocarbon groups of 1 to 8 carbon atoms, h is an integer of 3 to 1,000, n is an integer of 3 to 1,000, k is an integer of 1 to 1,000, and m is an integer of 1 to 50.

7. The composition of claim 6, wherein R¹ is 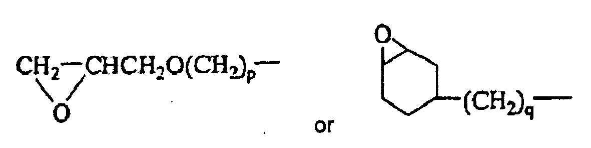 wherein p is an integer of 1 to 6, and q is an integer of 1 to 4.

8. The method of claim 2, wherein the silicone compound of component (c) has 3 to 500 epoxy groups per molecule.

9. he method of claim 2, wherein the silicone compound of component (c) has 3 to 100 epoxy groups per molecule.

10. The method of any one of claims 2, 8 or 9, wherein the epoxy group in component (c) is 3,4-epoxycyclohexylethyl group or γ-glycidoxypropyl group which is bonded to a silicone atom of the silicone compound.

11. The method of any one of claims 2, 8 or 9, wherein the epoxy group in component (c) is at least one epoxy-containing compound having the formula selected from the group consisting of the following formulae: 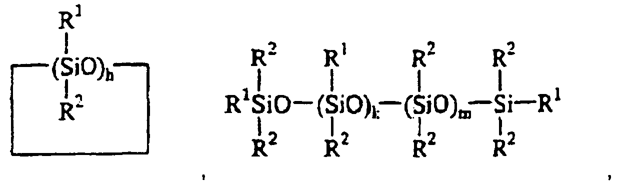 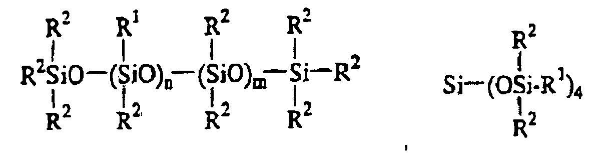 and 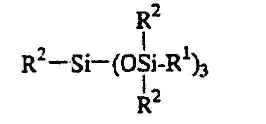 wherein R¹ is each independently selected from substituted or unsubstituted, monovalent hydrocarbon groups of 1 to 10 carbon atoms having at least one epoxy group, R² is each independently selected from substituted or unsubstituted, monovalent hydrocarbon groups of 1 to 8 carbon atoms, h is an integer of 3 to 1,000, n is an integer of 3 to 1,000, k is an integer of 1 to 1,000, and m is an integer of 1 to 50.

12. The method of claim 11, wherein R¹ is 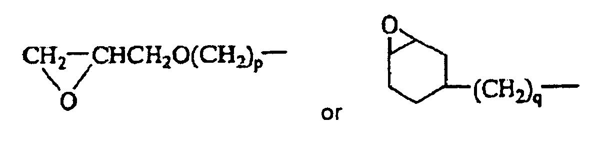 wherein p is an integer of 1 to 6, and q is an integer of 1 to 4.

## Patentansprüche

1. Strangpressbare Siliconkautschuk-Zusammensetzung, umfassend eine Zubereitung, erhalten durch Wärmebehandeln einer Mischung, umfassend (a) 100 Gewichtsteile eines Organopolysiloxans der durchschnittlichen Zusammensetzungsformel (1):
RₐSiO_{(4-a)/2} (1)
worin R jeweils unabhängig eine substituierte oder unsubstituierte, einwertige Kohlenwasserstoffgruppe ist, und "a" eine positive Zahl von 1,90 bis 2,05 ist, (b) 10 bis 100 Gewichtsteile verstärkendes Siliciumdioxid mit einer spezifischen Oberfläche von mindestens 50 m²/g, und (c) 0,1 bis 50 Gewichtsteile einer Siliconverbindung mit 3 bis 1000 Epoxygruppen pro Molekül, bei einer Temperatur von mindestens 150°C während mindestens 30 Minuten, und
(d) eine katalytische Menge eines Heißluft-Vulkanisationskatalysators.

2. Verfahren zur Herstellung einer strangpressbaren Siliconkautschuk-Zusammensetzung, umfassend die Schritte: Wärmebehandeln einer Mischung, umfassend (a) 100 Gewichtsteile eines Organopolysiloxans der durchschnittlichen Zusammensetzungsformel (1):
RₐSiO_{(4-a)/2} (1)
worin R jeweils unabhängig eine substituierte oder unsubstituierte, einwertige Kohlenwasserstoffgruppe ist, und "a" eine positive Zahl von 1,90 bis 2,05 ist, (b) 10 bis 100 Gewichtsteile verstärkendes Siliciumdioxid mit einer spezifischen Oberfläche von mindestens 50 m²/g, und (c) 0,1 bis 50 Gewichtsteile einer Siliconverbindung mit 3 bis 1000 Epoxygruppen pro Molekül, bei einer Temperatur von mindestens 150°C während mindestens 30 Minuten zur Bildung einer Zubereitung, und Einbringen (d) einer katalytischen Menge eines Heißluft-Vulkanisationskatalysators in die Zubereitung.

3. Zusammensetzung nach Anspruch 1, wobei die Siliconverbindung der Komponente (c) 3 bis 500 Epoxygruppen pro Molekül besitzt.

4. Zusammensetzung nach Anspruch 1, wobei die Siliconverbindung der Komponente (c) 3 bis 100 Epoxygruppen pro Molekül besitzt.

5. Zusammensetzung nach mindestens einem der Ansprüche 1, 3 oder 4, wobei die Epoxygruppe in Komponente (c) 3,4-Epoxycyclohexylethylgruppe oder γ-Glycidoxypropylgruppe, gebunden an ein Siliciumatom der Siliconverbindung, ist.

6. Zusammensetzung nach mindestens einem der Ansprüche 1, 3 oder 4, wobei die Epoxygruppe in Komponente (c) mindestens eine epoxyhaltige Verbindung einer Formel ist, gewählt aus der Gruppe, bestehend aus den folgenden Formeln: 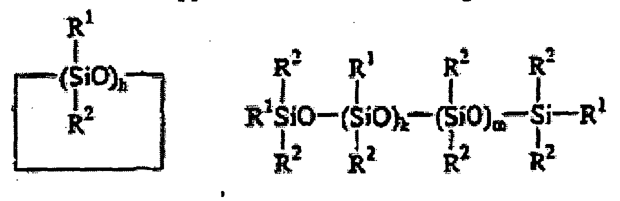 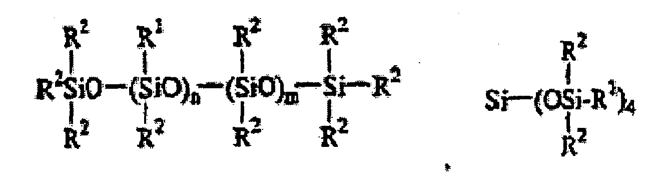 und 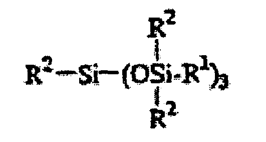 worin R¹ jeweils unabhängig gewählt ist aus substituierten oder unsubstituierten, einwertigen Kohlenwasserstoffgruppen mit 1 bis 10 Kohlenstoffatomen, die mindestens eine Epoxygruppe besitzen, R² jeweils unabhängig gewählt ist aus substituierten oder unsubstituierten, einwertigen Kohlenwasserstoffgruppen mit 1 bis 8 Kohlenstoffatomen, h eine ganze Zahl von 3 bis 1000 ist, n eine ganze Zahl von 3 bis 1000 ist, k eine ganze Zahl von 1 bis 1000 ist, und m eine ganze Zahl von 1 bis 50 ist.

7. Zusammensetzung nach Anspruch 6, worin R¹ 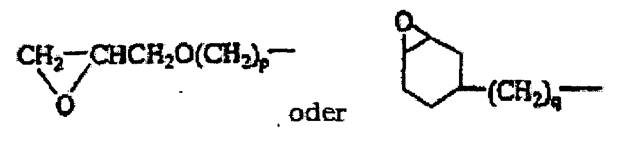 ist, worin p eine ganze Zahl von 1 bis 6 ist, und q eine ganze Zahl von 1 bis 4 ist.

8. Verfahren nach Anspruch 2, wobei die Siliconverbindung der Komponente (c) 3 bis 500 Epoxygruppen pro Molekül besitzt.

9. Verfahren nach Anspruch 2, wobei die Siliconverbindung der Komponente (c) 3 bis 100 Epoxygruppen pro Molekül besitzt.

10. Verfahren nach mindestens einem der Ansprüche 2, 8 oder 9, wobei die Epoxygruppe in Komponente (c) 3,4-Epoxycyclohexylethylgruppe oder γ-Glycidoxypropylgruppe, gebunden an ein Siliciumatom der Siliconverbindung, ist.

11. Verfahren nach mindestens einem der Ansprüche 2, 8 oder 9, wobei die Epoxygruppe in Komponente (c) mindestens eine epoxyhaltige Verbindung einer Formel ist, gewählt aus der Gruppe, bestehend aus den folgenden Formeln: 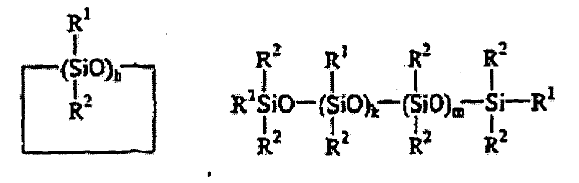 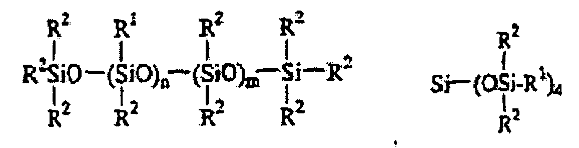 und 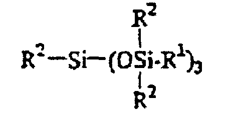 worin R¹ jeweils unabhängig gewählt ist aus substituierten oder unsubstituierten, einwertigen Kohlenwasserstoffgruppen mit 1 bis 10 Kohlenstoffatomen, die mindestens eine Epoxygruppe besitzen, R² jeweils unabhängig gewählt ist aus substituierten oder unsubstituierten, einwertigen Kohlenwasserstoffgruppen mit 1 bis 8 Kohlenstoffatomen, h eine ganze Zahl von 3 bis 1000 ist, n eine ganze Zahl von 3 bis 1000 ist, k eine ganze Zahl von 1 bis 1000 ist, und m eine ganze Zahl von 1 bis 50 ist.

12. Verfahren nach Anspruch 11, worin R¹ 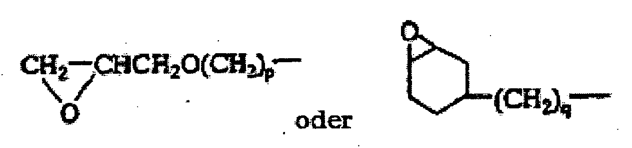 ist, worin p eine ganze Zahl von 1 bis 6 ist, und q eine ganze Zahl von 1 bis 4 ist.

## Revendications

1. Composition de caoutchouc silicone moulable par extrusion comprenant une formulation obtenue par traitement thermique d'un mélange contenant (a) 100 parties en poids d'un organopolysiloxane présentant la formule moyenne suivante (1) :
RₐSiO_{(4-a)/2} (1)
où R représente chacun indépendamment un groupe hydrocarbure monovalent substitué ou non substitué, et où « a » représente un nombre positif compris entre 1,90 et 2,05, (b) 10 à 100 parties en poids de silice de renforcement présentant une surface spécifique supérieure ou égale à 50 m²/g et (c) 0,1 à 50 parties en poids de composé de silicone comportant de 3 à 1 000 groupes époxy par molécule, à une température d'au moins 150 °C pendant au moins 30 mn, et (d) une quantité catalytique d'un catalyseur de vulcanisation à l'air chaud.

2. Procédé de préparation d'une composition de caoutchouc silicone moulable par extrusion comprenant les étapes suivantes : traitement thermique d'un mélange contenant (a) 100 parties en poids d'un organopolysiloxane présentant la formule de composition moyenne suivante (1) :
RₐSiO_{(4-a)/2} (1)
où R représente chacun indépendamment un groupe hydrocarbure monovalent substitué ou non substitué, et où « a » représente un nombre positif compris entre 1,90 et 2,05, (b) 10 à 100 parties en poids de silice de renforcement présentant une surface spécifique supérieure ou égale à 50 m²/g et (c) 0,1 à 50 parties en poids de composé de silicone comportant de 3 à 1 000 groupes époxy par molécule, à une température d'au moins 150 °C pendant au moins 30 mn pour donner une formulation, et incorporant (d) une quantité catalytique d'un catalyseur de vulcanisation à l'air chaud dans la formulation.

3. Composition selon la revendication 1, dans laquelle le composé de silicone du composant (c) comporte de 3 à 500 groupes époxy par molécule.

4. Composition selon la revendication 1, dans laquelle le composé de silicone du composant (c) comporte de 3 à 100 groupes époxy par molécule.

5. Composition selon l'une des revendications 1, 3 ou 4, dans laquelle le groupe époxy dans le composant (c) est le groupe 3,4-époxycyclohexyléthyle ou le groupe y-glycidoxypropyle lié à un atome de silicium du composé de silicone.

6. Composition selon l'une des revendications 1, 3 ou 4, dans laquelle le groupe époxy dans le composant (c) est au moins un composé contenant un groupe époxy présentant la formule choisie dans l'ensemble constitué des formules suivantes : 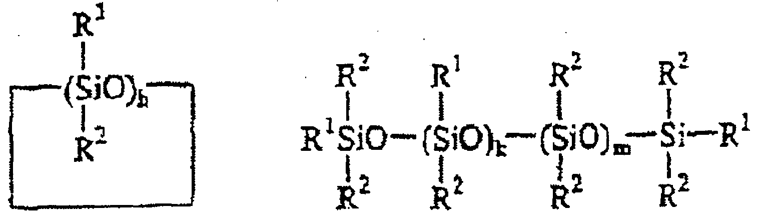 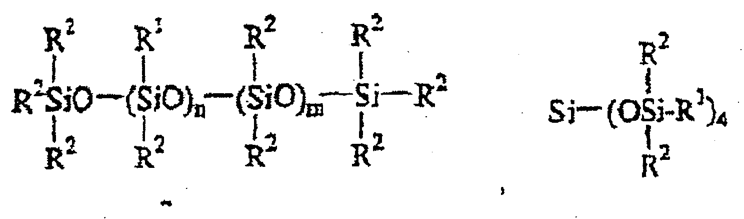 et 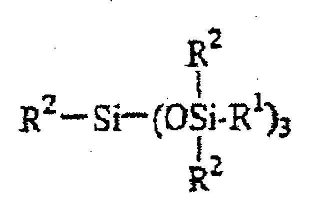 où chaque R¹ est indépendamment choisi parmi les groupes hydrocarbure monovalents substitués ou non comptant 1 à 10 atomes de carbone présentant au moins un groupe époxy, où chaque R² est indépendamment choisi parmi les groupes hydrocarbure monovalents substitués ou non, comptant de 1 à 8 atomes de carbone et où h représente un nombre entier compris entre 3 et 1 000, où n représente un nombre entier compris entre 3 et 1 000, où k représente un nombre entier compris entre 1 et 1 000 et où m représente un nombre entier compris entre 1 et 50.

7. Composition selon la revendication 6, dans laquelle R¹ représente 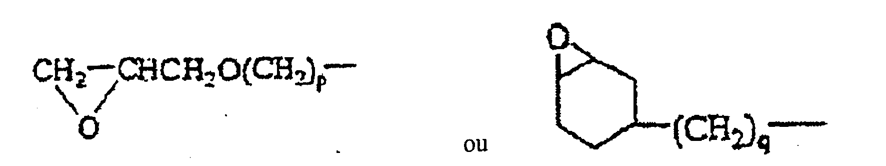 où p représente un nombre entier compris entre 1
et 6, et où q représente un nombre entier compris entre 1 et 4.

8. Procédé selon la revendication 2, dans lequel le composé de silicone du composant (c) comporte de 3 à 500 groupes époxy par molécule.

9. Procédé selon la revendication 2, dans lequel le composé de silicone du composant (c) comporte de 3 à 100 groupes époxy par molécule.

10. Procédé selon l'une des revendications 2, 8 ou 9, dans lequel le groupe époxy du composant (c) est le groupe 3,4-époxycyclohexyléthyle ou le groupe γ-glycidoxypropyle, lié à un atome de silicium du composé de silicone.

11. Procédé selon l'une des revendications 2, 8 ou 9, dans lequel le groupe époxy du composant (c) est au moins un composé contenant le groupe époxy présentant la formule choisie dans l'ensemble constitué des formules suivantes : 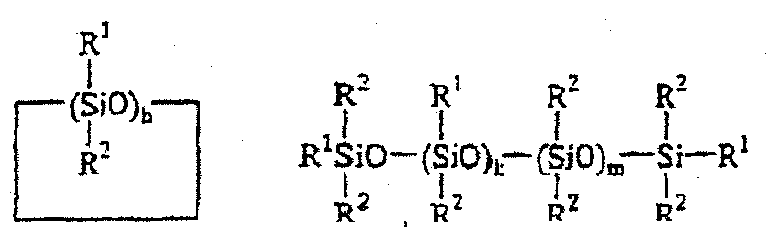 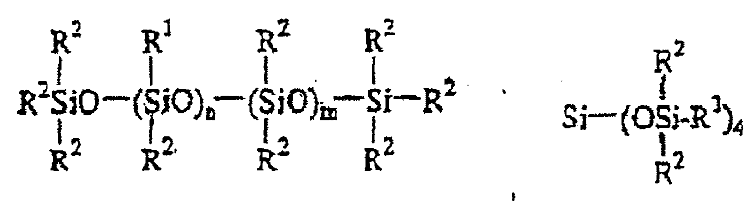 et 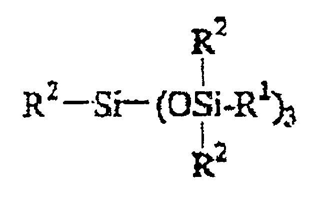 où chaque R¹ est indépendamment choisi parmi les groupes hydrocarbure monovalents substitués ou non comptant 1 à 10 atomes de carbone présentant au moins un groupe époxy, où chaque R² est indépendamment choisi parmi les groupes hydrocarbure monovalents substitués ou non, comptant de 1 à 8 atomes de carbone et où h représente un nombre entier compris entre 3 .et 1 000, où n représente un nombre entier compris entre 3 et 1 000, où k représente un nombre entier compris entre 1 et 1 000 et où m représente un nombre entier compris entre 1 et 50.

12. Procédé selon la revendication 11, dans lequel R¹ représente 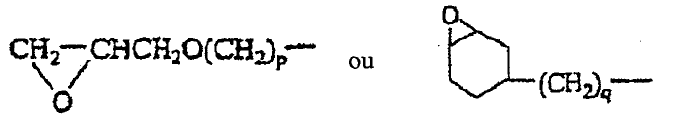 où p représente un nombre entier compris entre 1 et 6, et où q représente un nombre entier compris entre 1 et 4.
